(19)

Europäisches
Patentamt

European
Patent Office

Office européen
des brevets

(11)     **EP 1 890 160 A1**

(12)     **EUROPÄISCHE PATENTANMELDUNG**

(43) Veröffentlichungstag:
     **20.02.2008   Patentblatt 2008/08**

(51) Int Cl.:
     ***G01P 15/00*** *(2006.01)*     ***G01P 21/00*** *(2006.01)*

(21) Anmeldenummer: 06017146.9

(22) Anmeldetag: **17.08.2006**

(84) Benannte Vertragsstaaten:
     **AT BE BG CH CY CZ DE DK EE ES FI FR GB GR HU IE IS IT LI LT LU LV MC NL PL PT RO SE SI SK TR**
     Benannte Erstreckungsstaaten:
     **AL BA HR MK YU**

(71) Anmelder: **Delphi Technologies, Inc.**
     **Troy, Michigan 48007 (US)**

(72) Erfinder: **Freese, Wolfgang J.F., Dr.**
     **51789 Lindlar (DE)**

(74) Vertreter: **Manitz, Finsterwald & Partner GbR**
     **Postfach 31 02 20**
     **80102 München (DE)**

(54)     **Kalibrierverfahren**

(57)     Bei einem Verfahren zum Kalibrieren eines an oder in einem beweglichen Gegenstand, insbesondere einem Fahrzeug, montierbaren 1- oder 2-achsigen Beschleunigungssensors wird mittels des Beschleunigungssensors eine Mehrzahl von Beschleunigungsmessungen durchgeführt und auf der Basis der dabei erhaltenen Beschleunigungsmesswerte die Kalibrierung vorgenommen. Die für die Kalibrierung bestimmten Beschleunigungsmessungen werden während einer kontinuierlichen Änderung der auf eine jeweilige Sensorachse des Beschleunigungssensors wirkenden Beschleunigung durchgeführt.

**EP 1 890 160 A1**

**Beschreibung**

Die Erfindung betrifft ein Verfahren zum Kalibrieren eines an oder in einem beweglichen Gegenstand, insbesondere einem Fahrzeug, montierbaren 1- oder 2-achsigen Beschleunigungssensors, bei dem mittels des Beschleunigungssensors eine Mehrzahl von Beschleunigungsmessungen durchgeführt wird und auf der Basis der dabei erhaltenen Beschleunigungsmesswerte die Kalibrierung erfolgt.

Ein solches Verfahren kann insbesondere zum Kalibrieren eines so genannten Beschleunigungssensors für schwache vertikale g-Kräfte bzw. eines Sensors für schwache Beschleunigungen (Low g acceleration sensor) eingesetzt werden. Das Ausgangssignal eines solchen Sensors ist mit der auf eine jeweilige Sensorachse wirkenden Beschleunigung durch die folgende Beziehung verknüpft:

$$s = \text{Off} + S \cdot a,$$

wobei "s" das Ausgangssignal, "Off" der Offset, "S" die Empfindlichkeit und "a" die auf die Sensorachse wirkende Beschleunigung ist.

Wird der betreffende Beschleunigungssensor zur Messung der Neigung herangezogen, so wird der betreffenden Messung die folgende Beziehung zugrunde gelegt.

$$a = g \cdot \sin(\alpha),$$

wobei "a" wieder die auf die Sensorachse wirkende Beschleunigung, "g" die Erdbeschleunigung (9,81 m/s$^2$) und "$\alpha$" die Neigung des Sensors bzw. dessen Sensorachse bezüglich der Horizontalebene ist, was bedeutet, dass bei einer horizontalen Ausrichtung des Sensors dieser Winkel $\alpha$ gleich Null ist.

Die beiden Parameter "Off" und "S" werden unter Verwendung eines Kalibrierprozesses für jeden einzelnen Sensor hergeleitet.

Bei den bisher bekannten Verfahren der genannten Art wird der Beschleunigungssensor dazu in zwei oder mehrere unterschiedliche Positionen verbracht, um für jede dieser Positionen mittels des Sensors eine Mehrzahl von Messungen durchzuführen und auf der Basis der für die jeweiligen Positionen erhaltenen Messwerte die Parameter "Off" und "S" zu berechnen. Da die vom Sensor erhaltenen Messwerte jeweils mit einem Rauschen behaftet sind, werden bei jeder Sensorposition mehrere Messungen durchgeführt. Nachdem eine jeweilige Sensorposition stabilisiert ist, ist daher jeweils noch eine relativ lange Messzeit erforderlich, die jeweils etwa 20 bis 30 Sekunden dauern kann.

Der Erfindung liegt die Aufgabe zugrunde, ein verbessertes Verfahren der eingangs genannten Art zu schaffen, bei dem die zuvor erwähnten Probleme beseitigt sind.

Erfindungsgemäß wird diese Aufgabe dadurch gelöst, dass die für die Kalibrierung bestimmten Beschleunigungsmessungen während einer kontinuierlichen Änderung der auf eine jeweilige Sensorachse des Beschleunigungssensors wirkenden Beschleunigung durchgeführt werden.

Bevorzugt wird dabei jeweils auch der Neigungswinkel des Beschleunigungssensors bestimmt, bei dem ein jeweiliger Beschleunigungsmesswert erhalten wurde.

Bei der auf eine jeweilige Sensorachse des Beschleunigungssensors wirkenden Beschleunigung kann es sich insbesondere um die betreffende Erdbeschleunigungskomponente handeln. Weitere eventuell auftretende Beschleunigungen sind bei dem hier in Rede stehenden Kalibriervorgang in der Regel vernachlässigbar. Bei dem Neigungswinkel kann es sich insbesondere um den Winkel handeln, den der Beschleunigungssensor mit der Horizontalebene einschließt.

Gemäß einer bevorzugten praktischen Ausgestaltung des erfindungsgemäßen Verfahrens werden die für die Kalibrierung bestimmten Beschleunigungsmessungen während der Überführung des Beschleunigungssensors aus einer Ausgangsposition in eine vorgebbare Endposition durchgeführt.

Gemäß einer bevorzugten praktischen Ausgestaltung des erfindungsgemäßen Verfahrens werden die für die Kalibrierung bestimmten Beschleunigungsmessungen während einer Drehung des Beschleunigungssensors durchgeführt.

Dabei werden die für die Kalibrierung bestimmten Beschleunigungsmessungen vorteilhafterweise während einer Drehung des Beschleunigungssensors um eine zumindest im Wesentlichen horizontale Achse durchgeführt.

Insbesondere bei einem 1-achsigen Beschleunigungssensor werden die für die Kalibrierung bestimmten Beschleunigungsmessungen zweckmäßigerweise während einer Drehung des Beschleunigungssensors um eine zur Sensorachse zumindest im Wesentlichen senkrechte Achse durchgeführt.

Im Fall eines Beschleunigungssensors mit zwei zueinander senkrechten Sensorachsen ist es von Vorteil, wenn die für die Kalibrierung bestimmten Beschleunigungsmessungen während einer Drehung des Beschleunigungssensors um eine Achse durchgeführt werden, die mit den beiden Sensorachsen jeweils einen Winkel von 45° einschließt. Grundsätzlich ist es jedoch auch denkbar, die Beschleunigungsmessungen für die beiden Sensorachsen getrennt durchzuführen und dabei den Sensor jeweils wieder um eine zur jeweiligen Sensorachse zumindest im Wesentlichen senkrechte Achse zu drehen. Bevorzugt ist jedoch die zuvor erwähnte gleichzeitige Erfassung der Beschleunigungsmesswerte für die beiden Beschleunigungssensoren während einer Drehung des Beschleunigungssensors um eine Achse, die mit den beiden Sensorachsen jeweils einen Winkel im Bereich von 45° einschließt, wobei natürlich der Einfluss der geometrischen Anordnung der Sensorachse und der Drehachse entsprechend mit zu berücksichtigen ist.

Bevorzugt wird auf der Basis der erhaltenen Beschleunigungsmesswerte zur Kalibrierung eine rechnergestützte Optimierung entsprechend einem Optimierungsalgorithmus durchgeführt.

Bevorzugt werden hierbei für jede Sensorachse jeweils wenigstens zwei Parameter optimiert.

Das Ausgangssignal des Beschleunigungssensors ist mit der auf eine jeweilige Sensorachse wirkenden Beschleunigung bei den Sensoren, für die das erfindungsgemäße Verfahren bevorzugt eingesetzt wird, durch die folgende Beziehung verknüpft:

$$s = \text{Off} + S \cdot a,$$

wobei "s" das Ausgangssignal, "Off" der Offset, "S" die Empfindlichkeit und "a" die auf die Sensorachse wirkende Beschleunigung ist. Bevorzugt werden in diesem Fall für jede Sensorachse die beiden Parameter Offset (Off) und Empfindlichkeit (S) optimiert.

Gemäß einer bevorzugten praktischen Ausgestaltung des erfindungsgemäßen Verfahrens wird die rechnergestützte Optimierung entsprechend einem Simplex-Algorithmus, vorteilhafterweise dem Nelder-Mead-Simplex-Algorithmus durchgeführt.

Die erhaltenen Beschleunigungsmesswerte können für die Kalibrierung zweckmäßigerweise zwischengespeichert werden.

Die Kalibrierung kann vorteilhafterweise in einer insbesondere stationären Kalibriereinrichtung durchgeführt werden.

Die zuvor erwähnte definierte Endposition des Beschleunigungssensors korreliert vorteilhafterweise mit der Einbauposition des Beschleunigungssensors in dem beweglichen Gegenstand bzw. Fahrzeug.

Die für die Kalibrierung bestimmten Beschleunigungsmessungen werden also bevorzugt während einer Drehung des Sensors in dessen definierte Endposition durchgeführt. Die Daten sind mit einem Rauschen behaftet, und es werden gleichzeitig die Neigungswinkel bestimmt, bei denen die betreffenden Daten bzw. Beschleunigungsmesswerte erhalten werden. Mittels eines Optimierungsalgorithmus wie beispielsweise des Nelder-Mead-Simplex-Algorithmus werden die beiden Parameter "Off" und "S", d.h. der Offset sowie die Empfindlichkeit einer jeweiligen Sensorachse insbesondere zur Unterdrückung des Rauschens entsprechend optimiert, was in einer sehr kurzen Zeit möglich ist, die in der Praxis nicht mehr als eine Sekunde beträgt. Selbst wenn die Toleranz dieses Ergebnisses (ΔOff und ΔS) geringer als bei den bisher üblichen Verfahren sein sollte, ist sie in der Praxis in der Regel ausreichend. Das erfindungsgemäße Kalibrierverfahren ist demzufolge im Vergleich zu den bisher üblichen Verfahren wesentlich kostengünstiger.

Anders als bei den bisher bekannten Verfahren muss bei dem erfindungsgemäßen Kalibrierverfahren nicht mehr abgewartet werden, bis der Beschleunigungssensor eine stabile Position erreicht hat. Es entfällt auch die bisher erforderliche anschließende Durchführung einer Vielzahl von Messungen. Indem erfindungsgemäß die Messungen durchgeführt werden, während der Sensor gedreht wird, verringern sich die Warte- und Messzeiten, wobei in der Praxis beispielsweise einige Sekunden eingespart werden können.

**Patentansprüche**

1. Verfahren zum Kalibrieren eines an oder in einem beweglichen Gegenstand, insbesondere einem Fahrzeug, montierbaren 1- oder 2-achsigen Beschleunigungssensors, bei dem mittels des Beschleunigungssensors eine Mehrzahl von Beschleunigungsmessungen durchgeführt wird und auf der Basis der dabei erhaltenen Beschleunigungsmesswerte die Kalibrierung erfolgt,
**dadurch gekennzeichnet,**
**dass** die für die Kalibrierung bestimmten Beschleunigungsmessungen während einer kontinuierlichen Änderung der auf eine jeweilige Sensorachse des Beschleunigungssensors wirkenden Beschleunigung durchgeführt werden.

2. Verfahren nach Anspruch 1,
**dadurch gekennzeichnet,**
**dass** jeweils auch der Neigungswinkel des Beschleunigungssensors bestimmt wird, bei dem ein jeweiliger Beschleunigungsmesswert erhalten wurde.

3. Verfahren nach Anspruch 1 oder 2,
**dadurch gekennzeichnet,**
**dass** die für die Kalibrierung bestimmten Beschleunigungsmessungen während der Überführung des Beschleunigungssensors aus einer Ausgangsposition in eine vorgebbare Endposition durchgeführt werden.

4. Verfahren nach einem der vorhergehenden Ansprüche,
**dadurch gekennzeichnet,**
**dass** die für die Kalibrierung bestimmten Beschleunigungsmessungen während einer Drehung des Beschleunigungssensors durchgeführt werden.

5. Verfahren nach Anspruch 4,
**dadurch gekennzeichnet,**
**dass** die für die Kalibrierung bestimmten Beschleunigungsmessungen während einer Drehung des Beschleunigungssensors um eine zumindest im Wesentlichen horizontale Achse durchgeführt werden.

6. Verfahren nach Anspruch 4 oder 5,
**dadurch gekennzeichnet,**
**dass** die für die Kalibrierung bestimmten Beschleunigungsmessungen während einer Drehung des Beschleunigungssensors um eine zu einer jeweiligen Sensorachse zumindest im Wesentlichen senkrechte Achse durchgeführt werden.

7. Verfahren nach einem der vorhergehenden Ansprüche,
**dadurch gekennzeichnet,**
**dass** im Fall eines Beschleunigungssensors mit zwei zueinander senkrechten Sensorachsen die für die Kalibrierung bestimmten Beschleunigungsmessungen während einer Drehung des Beschleunigungssensors um eine Achse durchgeführt werden, die mit den beiden Sensorachsen jeweils einen Winkel von 45° einschließt.

8. Verfahren nach einem der vorhergehenden Ansprüche,
**dadurch gekennzeichnet,**
**dass** auf der Basis der erhaltenen Beschleunigungsmesswerte zur Kalibrierung eine rechnergestützte Optimierung entsprechend einem Optimierungsalgorithmus durchgeführt wird.

9. Verfahren nach Anspruch 8,
**dadurch gekennzeichnet,**
**dass** für jede Sensorachse jeweils wenigstens zwei Parameter optimiert werden.

10. Verfahren nach Anspruch 9,
**dadurch gekennzeichnet,**
**dass** das Ausgangssignal (s) des Beschleunigungssensors mit der auf eine jeweilige Sensorachse wirkenden Beschleunigung (a) durch die folgende Beziehung verknüpft ist:

$$s = \text{Off} + S \bullet a,$$

wobei "s" das Ausgangssignal, "Off" der Offset, "S" die Empfindlichkeit und "a" die auf die Sensorachse wirkende Beschleunigung ist.

11. Verfahren nach Anspruch 10,
**dadurch gekennzeichnet,**
**dass** für jede Sensorachse die beiden Parameter Offset (Off) und Empfindlichkeit (S) optimiert werden.

12. Verfahren nach einem der vorhergehenden Ansprüche,
**dadurch gekennzeichnet,**
**dass** die rechnergestützte Optimierung entsprechend einem Simplex-Algorithmus durchgeführt wird.

13. Verfahren nach Anspruch 12,
**dadurch gekennzeichnet,**
**dass** die rechnergestützte Optimierung entsprechend dem Nelder-Mead-Simplex-Algorithmus durchgeführt wird.

14. Verfahren nach einem der vorhergehenden Ansprüche,
**dadurch gekennzeichnet,**
**dass** die erhaltenen Beschleunigungsmesswerte für die Kalibrierung zwischengespeichert werden.

15. Verfahren nach einem der vorhergehenden Ansprüche,
**dadurch gekennzeichnet,**
**dass** die Kalibrierung in einer insbesondere stationären Kalibriereinrichtung durchgeführt wird.

16. Verfahren nach einem der vorhergehenden Ansprüche,
**dadurch gekennzeichnet,**
**dass** die definierte Endposition des Beschleunigungssensors mit der Einbauposition des Beschleunigungssensors in dem beweglichen Gegenstand bzw. Fahrzeug korreliert.

**Europäisches Patentamt**

**EUROPÄISCHER RECHERCHENBERICHT**

Nummer der Anmeldung

EP 06 01 7146

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 823 279 B1 (NADKARNI VIVEK B [US] ET AL) 23. November 2004 (2004-11-23) * Spalte 3, Zeile 5 - Zeile 17 * * Spalte 5, Zeile 11 - Spalte 6, Zeile 54 * * Spalte 7, Zeile 24 - Spalte 10, Zeile 16 * * Abbildungen 1a-1e,3 * ----- | 1-16 | INV. G01P15/00 G01P21/00 |
| X | US 2 788 654 A (WIANCKO THOMAS H ET AL) 16. April 1957 (1957-04-16) * Spalte 3, Zeile 8 - Spalte 4, Zeile 55 * * Abbildung 1 * ----- | 1 | |
| A | US 2004/007064 A1 (SAKAGUCHI ISAO [JP]) 15. Januar 2004 (2004-01-15) * das ganze Dokument * ----- | 1-16 | |

| RECHERCHIERTE SACHGEBIETE (IPC) |
|---|
| G01P |

Der vorliegende Recherchenbericht wurde für alle Patentansprüche erstellt

| Recherchenort | Abschlußdatum der Recherche | Prüfer |
|---|---|---|
| Den Haag | 5. Februar 2007 | Reto, Davide |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 01 7146

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-02-2007

| Im Recherchenbericht angeführtes Patentdokument | Datum der Veröffentlichung | Mitglied(er) der Patentfamilie | Datum der Veröffentlichung |
|---|---|---|---|
| US 6823279 B1 | 23-11-2004 | KEINE | |
| US 2788654 A | 16-04-1957 | KEINE | |
| US 2004007064 A1 | 15-01-2004 | CN 1470879 A<br>KR 20040005650 A<br>TW 225154 B | 28-01-2004<br>16-01-2004<br>11-12-2004 |

EPO FORM P0461

Für nähere Einzelheiten zu diesem Anhang : siehe Amtsblatt des Europäischen Patentamts, Nr.12/82